**Europäisches Patentamt**

**European Patent Office**

**Office européen des brevets**

(19)

(11) Publication number : **0 078 658 B2**

# (12) NEW EUROPEAN PATENT SPECIFICATION

(45) Date of publication of the new patent specification : **02.12.92 Bulletin 92/49**

(51) Int. Cl.⁵ : **C03B 11/08,** C03B 23/00, C03C 3/12

(21) Application number : **82305700.5**

(22) Date of filing : **27.10.82**

(54) A process for moulding glass shapes.

(30) Priority : **30.10.81 US 316861**

(43) Date of publication of application :
**11.05.83 Bulletin 83/19**

(45) Publication of the grant of the patent :
**16.07.86 Bulletin 86/29**

(45) Mention of the opposition decision :
**02.12.92 Bulletin 92/49**

(84) Designated Contracting States :
**DE FR GB NL**

(56) References cited :
**EP-A- 0 019 342**
**WO-A-82/03621**
**DE-A- 2 438 836**
**DE-A- 2 506 455**
**DE-A- 2 639 259**
**DE-C- 397 427**
**DE-C- 501 283**
**GB-A- 1 367 335**
**GB-A- 1 446 413**
**GB-A-20 699 94**
**US-A- 2 410 616**

(56) References cited :
**US-A- 3 833 347**
**US-A- 3 844 755**
**US-A- 3 900 328**
**US-A- 4 073 654**
**US-A- 4 139 677**
**US-A-41 689 61**
"Handbook of Glass Manufacture", Vol. 1, Fay
Y. Tooley, Ogden Publishing Company, 1961,
pages 451, 457, 460, 467 and 469;
Table: "Typische Temperaturen von Glas"
published in the German periodical GIT 7,
1963, Vol. 12;

(73) Proprietor : **Corning Glass Works**
**Houghton Park**
**Corning New York 14831 (US)**

(72) Inventor : **Marechal, Jean-Pierre**
**6, Rue du Vieux Point**
**F-77880 Grez-Sur-Loing (FR)**
Inventor : **Maschmeyer, Richard Orr**
**Powderhorn Drive**
**Corning New York, 14830 (US)**

(74) Representative : **Boon, Graham Anthony et al**
**Elkington and Fife Prospect House 8**
**Pembroke Road**
**Sevenoaks, Kent TN13 1XR (GB)**

**EP 0 078 658 B2**

## Description

Precision optical elements require highly polished surfaces of exacting figure and surface quality. The surfaces demand fabrication in proper geometric relation to each other and, where the elements are to be used in transmission applications, they will be prepared from a material of controlled, uniform, and isotropic refractive index.

Precision optical elements of glass are customarily produced via one of two complex, multi-step processes. In the first, a glass batch is melted in a conventional manner and the melt formed into a glass body having a controlled and homogeneous refractive index. Thereafter, the body may be reformed utilizing well-known repressing techniques to yield a shape approximating the desired final article. The surface figure and finish of the body at this stage of production, however, are not adequate for image forming optics. The rough article is fine annealed to develop the proper refractive index and the surface figure improved via conventional grinding practices. In the second method, the glass melt is formed into a bulk body which is immediately fine annealed and subsequently cut and ground to articles of a desired configuration.

Both processes are subject to similar limitations. The surface profiles that are produced through grinding are normally restricted to conic sections, such as flats, spheres, and parabolas. Other shapes and, in particular, general aspheric surfaces are difficult to grind. In both processes, the ground optical surfaces are polished employing conventional, but complicated, polishing techniques which strive to improve surface finish without compromising the surface figure. In the case of aspheric surfaces, this polishing demands highly skilled and expensive hand working. A final finishing operation, viz., edging, is commonly required. Edging ensures that the optical and mechanical axes of a spherical lens coincide. Edging, however, does not improve the relationship of misaligned aspheric surfaces, a factor which accounts in part for the difficulty experienced in grinding such lenses.

It is quite apparent that direct moulding of lenses to the finished state could, in principle, eliminate the grinding, polishing, and edging operations, which are especially difficult and time consuming for aspheric lenses. Indeed, moulding processes are utilized for fabricating plastic lenses. Nevertheless, existing plastics suitable for optical applications are available in a limited refractive index and dispersion range only. Furthermore, many plastics scratch easily and are prone to the development of yellowing, haze, and birefringence. The use of abrasion resistant and antireflective coatings has not fully solved those failings. Moreover, plastic optical elements are subject to distortion from mechanical forces, humidity, and heat. Both the volume and refractive index of plastics vary substantially with changes in temperature, thereby limiting the temperature interval over which they are useful.

In sum, the overall properties of glass render it generally superior to plastic as an optical material. Conventional hot pressing of glass, however, does not provide the exacting surface figures and surface qualities demanded for image forming optics. The presence of chill wrinkles in the surface and surface figure deviations constitute chronic afflictions. As observed above, similar problems can be encountered in conventional repressing techniques.

Various schemes have been devised to correct those problems, such devices frequently involving isothermal pressing, i.e., utilizing heated moulds so that the temperature of the glass being moulded will be substantially the same as that of the moulds, the use of gaseous environments inert to the glass and mould materials during the pressing operation, and/or the use of materials of specifically defined compositions in the construction of the moulds.

For example, United States Patent No. 2,410,616 describes an apparatus and method for moulding glass lenses. The moulds are capable of being heated and the temperatures thereof controlled within narrow ranges compatible with the glasses being moulded. An inert or reducing gas environment (preferably hydrogen) is used in contact with the mould surfaces to inhibit oxidation thereof. The principal inventive disclosure in that patent involves the use of a flame curtain (normally burning hydrogen) over the opening of a chamber enclosing the moulds to prevent the entrance of air thereinto. No working example specifically illustrating moulding process parameters is provided.

United States Patent No. 3,833,347 is also directed to an apparatus and method for press moulding glass lenses. Again, the moulds are capable of being heated and the temperature thereof closely controlled. An inert gas surrounds the moulds to preclude oxidation thereof. The inventive disclosure contemplates the use of mould surfaces composed of glasslike carbon. The use of metal dies was stated to produce lens surfaces which are not suitable for photographic applications. The method involves eight steps: (1) a chunk of glass is placed into a mould; (2) a chamber surrounding the mould is first evacuated and then a reducing gas is introduced therein; (3) the mould temperature is raised to about the softening point of the glass; (4) a load is applied to the mould to shape the glass; (5) the temperature of the mould is reduced to below the transformation range of the glass, while maintaining the load on the mould to prevent distortion of the shaped glass body; (6) the load is removed; (7) the mould is further cooled to about 300°C to inhibit oxidation of the glasslike carbon; and, (8) the mould is opened. Glass lenses so produced were asserted to be essentially strain free such that no further annealing was necessary.

United States Patent No. 3,844,755 is directed to an apparatus and method for transfer moulding glass lenses. The method contemplates eight steps: (1) placing a gob of optical glass in a transfer chamber fabricated from glasslike carbon; (2) heating the chamber to first evacuate the air therefrom and then introducing a reducing gas therein; (3) heating the chamber to about the softening point of the glass; (4) applying a load to the softened glass to cause it to flow through sprues into mould cavities defined by glasslike carbon surfaces which shape the glass; (5) reducing the temperature of the chamber to below the transformation temperature of the glass, while maintaining the load to prevent distortion of the shaped glass body; (6) removing the load; (7) further cooling the chamber to about 300°C to inhibit oxidation of the glasslike carbon; and, (8) opening the mould.

United States Patent No. 3,900,328 provides a general description of moulding glass lenses utilizing moulds fabricated from glasslike carbon. Thus, the patent discloses placing a portion of heat-softened glass into the cavity of a mould prepared from glasslike carbon, applying appropriate amounts of heat and pressure to the mould, while maintaining a non-oxidizing atmosphere in the vicinity of the mould, cooling and opening the mould, and then removing the finished lens therefrom.

United States Patent No. 4,073,654 is concerned with the press forming of optical lenses from hydrated glass. The process comprehends placing granules of hydrated glass into a mould, drawing a vacuum on the mould, heating the mould to a sufficiently high temperature to sinter the granules into an integral shape while the mould is sealed to prevent escape of water vapour therefrom, applying a load to the mould, releasing the load from the mould and opening the mould. Suggested mould materials included glasslike carbon, tungsten carbide, and alloys of tungsten.

United States Patent No. 4,139,677 describes press forming and transfer moulding of glass lenses simulating the method of Patent No. 3,833,347 and 3,844,755 above, but utilizing silicon carbide or silicon nitride as the glass contacting material of the moulds, rather than glasslike carbon.

European Patent Application No. 19342 discloses the isothermal pressing of glass lenses at temperatures above the softening points of the glasses, i.e., at temperatures where the glasses exhibit viscosities of less than $10^{7.6}$ poises ($10^{6.6}$ Pa. s). There is no discussion of the manner in which the pressed lenses are cooled to room temperature so it must be assumed that the "conventional" practice was utilized.

In summary, the prior art relating to the isothermal pressing of glass lenses has generally involved pressing at temperatures at or above the softening point of the glass with annealing of the lenses under load within the mould. It is quite apparent that, by its very nature, the process is slow, i.e. the pressing cycle involving the time required for inserting the glass into the mould, pressing, annealing in the mould, and removal of the lens from the mould is undesirably long.

WO-A1-82/03621, published 28. 10.82 and therefore falling within the terms of Article 54.3 EPC, describes a process for moulding a glass shape, for example a lens, in which a preform is initially heated to a first temperature at which it has a viscosity of from $10^{11}$ to $10^{13.5}$ Pa. s, and then a thin surface layer of the shape is heated to a second temperature which lies between the first temperature and a temperature at which the viscosity is $10^4$ Pa. s. The shape is then pressed to its final configuration.

The present invention is an improvement upon the known process for isothermally pressing glass objects which improvement is capable of yielding shapes of exceedingly high precision and reproducibility, provides press cycling times of much shorter duration, and permits the use of a wide range of mould materials.

The present invention provides a process as set out in Claim 1 below.

The nature of the mould material is not critical; it must be capable of accepting a good surface finish, be substantially inert to the glass, and have sufficient rigidity to retain the surface figure at pressing temperatures. In particular, problems of replicating detrimental features of the mould surface, such as the crystal structure of metal moulds, have not been encountered in the process of the present invention. Hence, a wide variety of mould surface materials is available. Those which can be used include several 400 series stainless steels, electroless nickel, beryllium nickel alloys, tungsten carbide, alloys of noble metals such as platinum, rhodium, and gold, and fused silica. Glasslike carbon, silicon carbide, and silicon nitride moulds are also operable but the present process does not require the use of such expensive materials. The mould surfaces may be in the form of either bulk material or coatings on an appropriate substrate.

In carrying out the moulding process according to the invention, a body of optical quality glass may be prepared through melting a batch therefor in a conventional manner. The weight of the glass body must be closely controlled, the weight range being determined by the design of the article to be moulded. Furthermore, the shape of the body is fashioned to minimize inclusion of optical inhomogeneities. Hence, the glass body is shaped to minimize trapping of gas in the mould cavities. For example, where a convex surface is to be moulded, the glass body should have a curve sharper than that of the mould cavity so that it will contact the centre of the mould cavity first. Within this constraint, the geometry of the glass body or preform will match the configuration of the mould as closely as possible. Such close matching results in the fastest, most balanced pressing, and provides a means for preventing the development of fins on the final article. Finally, in the most preferred embodiment, the glass preform will exhibit little surface roughness. The moulding process will improve the surface finish of the glass body, but excessive roughness can lead to surface inclusions and optical inhomogeneities.

A wide variety of temperatures and moulding pressures may be employed successfully to form glass articles of high precision, provided that certain minimum criteria are met:

First, the moulding operation will be conducted at temperatures at which the glass has a much higher viscosity when compared with customary glass pressing procedures. Thus, the glass will be moulded at viscosities of from about $10^8$ to about $10^{12}$ poises ($10^7$ to $10^{11}$ Pa. s) with the preferred range being from about $10^8$ to about $5 \times 10^{10}$ poises ( $10^7$ to $5 \times 10^9$ Pa . s). It is to be noted that this contrasts with WO-A1-82/03621, referred to above, where the glass actually being moulded, i.e. the surface layer, has a relatively low viscosity. Any glass composition may be deemed a candidate for the moulding process of the invention, provided a mould material is available which is capable of being fashioned into a good surface finish, is sufficiently refractory to withstand the pressing temperature, and is not substantially attacked by the glass composition at moulding temperatures.

Second, the moulding operation of the invention will involve an ostensibly isothermal condition during the period wherein the final figure of the shaped article is being formed. As employed herein, the term "isothermal" means that the temperature of the mould and that of the glass preform, at least in the vicinity of the mould, are approximately identical. It is to be noted that in WO-A1-82/03621 pressing is not carried out under isothermal conditions. The temperature differences permitted are dependent upon the overall size and specific design of the final glass shape, but the difference will, preferably, be less than 20°C and, most desirably, less than 10°C. This isothermal condition will be maintained for a period of sufficient length to allow the pressure on the moulds to force the glass preform to flow into conformity with the surface of the mould.

Normally, the glass products moulded in accordance with the inventive process contain too much thermal stress to be suitable for immediate use in optical applications and, therefore, a fine annealing step is demanded after moulding. Because of the isothermal environment utilized in the pressing procedure, however, and the fact that the moulded articles essentially totally conform to the mould surfaces, the articles shrink isotropically, thereby permitting them to be fine annealed without any significant distortion of the relative surface figure. Moreover, this annealing without distortion can be achieved outside of the mould with no elaborate physical support for the moulded shape. This practice leads to much shorter mould cycle times and precludes the need for recycling the moulds. In sum, there is no need to cool the mould under load with the glass shape retained therewithin to a temperature below the transformation range or transition temperature of the glass. Thus, the moulds can be held at temperatures where the glass is at a viscosity of no more than $10^{13}$ poises ($10^{12}$ Pa.s) (the minimum temperature at which the pressed articles are removed from the moulds), rather than cooling the moulds below the transformation range, perhaps even to room temperature, and then reheating. Such cycling consumes much energy and adversely affects the life of the moulds.

Laboratory experience has indicated that dimensional tolerances finer than 0.1 % and surface figure tolerances finer than 0.2 $\lambda$/cm in the visible range of the radiation spectrum can be achieved in the process of the invention.

In the accompanying drawings:

Figure 1 depicts a laboratory apparatus suitable for moulding glass bodies; and

Figure 2 represents another laboratory apparatus suitable for moulding glass bodies.

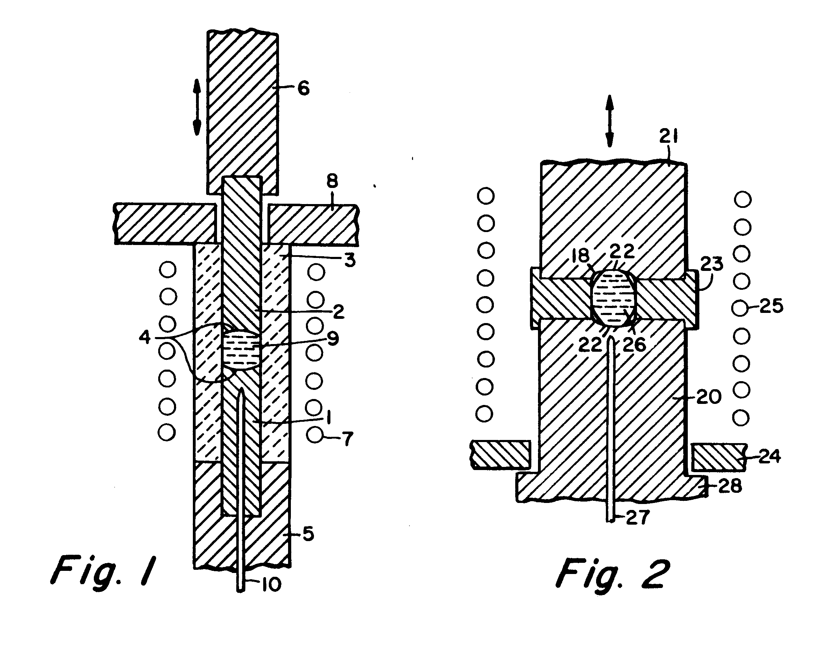

The specific structure of the moulding apparatus is not critical to the operation of the process of the invention. The press must contain some mechanism for moving the moulds against the glass preform and some constraints against the motion of the moulds. Such constraints are demanded to achieve the geometrical relationships required among the optical surfaces. It will be appreciated that such constraints may be constructed in a wide variety of ways. Two apparati developed in the laboratory for moulding lenses are illustrated schematically in Figures 1 and 2, purely by way of example. Hence, for example, the addition of mechanisms for automatic loading and unloading of the glass, alternative sources of heating, cooling, and press motion, and assignment of the essential functions to separate or different mechanical elements are considered to be well within the technical ingenuity of the worker of ordinary skill in the art.

In Figure 1, the moulds 1 and 2 resemble pins which slide inside a bushing 3. The optical surfaces or mould cavities 4 are fabricated in the ends of the moulds. The geometrical relationship of the optical surfaces to each other, i.e. the tilt and centration, and to the lens mounting surface is controlled by the fit of the moulds within the bushing. In this apparatus, mould carriers 5 and 6 attached to hydraulic cylinders (not shown) provide the motion to the moulds. The lower hydraulic cylinder moves lower mould 1 and bushing 3 into an induction heating coil 7 and holds bushing 3 against a frame 8. The upper cylinder forces upper mould 2 against the glass preform 9, causing it to flow. Heating is provided via induction heating and cooling is supplied by natural convection. The temperature of the assembly is monitored and controlled by thermocouple 10 in bottom mould 1.

In Figure 2, the moulds 20 and 21 resemble plates with the optical surfaces or mould cavities 22 fabricated into the faces thereof. Moulds 20 and 21 butt into a recess in a ring 23. The faces of the recess control tilt; the edges of the recess control centration. The moulds are attached to hydraulic cylinders (not shown) which impart motion thereto. The lower hydraulic cylinder moves lower mould 20 upward into contact with the frame 24 and into an induction heating coil 25. The upper hydraulic cylinder forces upper mould 21 against glass preform 26. The moulds and glass preform are subjected to induction heating and cooling is provided by natural convection. The temperature within the assembly is monitored and controlled by thermocouple 27.

The apparati illustrated in Figures 1 and 2 demonstrate two fundamentally different types of pressing operations. In Figure 1, the volume of the assembly cavity is variable. The moulds continue to move until the flowing glass completely fills the cavity. The thickness of the resulting lens is determined by the volume of glass in the mould assembly. In Figure 2, the moulds close to a stop so the volume of the cavity in the assembly is fixed. Customarily, the volume of the glass preform placed in the mould assembly will not completely fill the cavity. This factor results in some free glass surface not constrained by the mould being present on the glass, as indicated by 18 in Figure 2. The thickness of the lens is governed by the thickness of ring 23. High precision glass articles displaying accurate surface figures suitable for optical lenses have been moulded in the laboratory utilizing both methods and apparati, but use of the apparatus represented in Figure 1 is preferred.

The apparatus depicted in Figure 1 may also be employed to press glass bodies with a free surface, provided an external stop is attached to the mould carrier. The capability of achieving an accurate surface figure in contact with the mould, while a portion of the surface of the glass is unconstrained, is advantageous in furnishing a mechanism for inhibiting the development of a fin on the glass shape. A fin is a thin, fragile appendage resulting from glass flowing into a crack between two separate pieces of a mould assembly. Fins can give rise to checks, cracks, abrasion and contamination in a pressing process, as well as cosmetic defects.

In the actual operation of the presses depicted in Figures 1 and 2, the glass preform, lower mould, and bushing or ring assembled together manually. The lower hydraulic cylinder moves this assembly into the induction heating coil. The upper mould is thereafter brought into close proximity with the glass. An appropriate temperature-pressure sequence is applied to the moulds and glass preform. Subsequently, the upper mould is raised, the remaining assembly lowered below the heating coil, and the shaped article removed manually and transferred to a fine annealer. Depending upon the materials employed in the construction of the apparatus and the temperatures utilized in the pressing step, it may be advantageous to surround the moulding mechanism in a non-oxidizing environment to protect the high polish and high tolerance surfaces from changes due to oxidation.

Whereas the nature of the induction heating disclosed in Figures 1 and 2 precludes the likelihood of the temperature of the glass preform differing substantially from that of the mould, that illustrative form of heating should not be deemed to restrict the scope of the invention. For example, it is possible to introduce relatively hot glass into colder moulds and thereafter be pressed in a manner such that final conformity of the glass to the mould surface occurs only after the necessary isothermal conditions have been achieved.

Under isothermal conditions, the flow of the glass preform to conform to the mould is controlled by the following equation:

$$\frac{t_o P}{\mu} = C$$

(mould shape, starting glass shape)

where $t_o$ is the time required for conformity, P is the hydrostatic pressure in the glass as it is fully pressed and equals the pressing force divided by cavity surface area, and $\mu$ is the viscosity of the glass. The value of C depends upon the difference between the shape of the mould cavity and the starting shape of the glass, the smaller the difference, the smaller the value of C. Any combination of $t_o$, P, and $\mu$ yielding the appropriate value of C may be employed to mould the article. For practical reasons, combinations yielding low values of $t_o$ (pressing time) are to be preferred. Such combinations are highly dependent upon the value of C. This is illustrated in Example 3, infra, which describes circumstances wherein conformity is achieved at very high glass viscosities because the configuration of the mould surface and the geometry of the glass preform are quite close. By means of similar arguments, it is believed apparent that the pressing pressure, P, appropriate for precision moulding can vary quite broadly. Practical levels range from about 1 to about 50,000 psi (about $7 \times 10^3$ to $3.5 \times 10^8$ Pa) with the preferred interval encompassing about 500 to 2500 psi (about $3.5 \times 10^6$ to $1.7 \times 10^7$ Pa).

Example 1

A batch for a glass consisting essentially, in weight percent on the oxide basis, of about 47.6% $P_2O_5$, 4.3% $Na_2O$, 2.1 % $Li_2O$, 23% $BaF_2$, and 23% PbO was melted by conventional means in a platinum crucible. Because it is not known with which cation(s) the fluoride is combined, it is simply tabulated as $BaF_2$, the actual batch ingredient employed to incorporate fluoride into the glass composition. A bar of glass was cast from the melt and then shaped into a preform having a volume equal to and a geometry similar to that of a desired lens, utilizing forming and shaping technology well known to the glass art. The apparatus shown in Figure 1 was assembled in the manner described above. Moulds having a 10 mm diameter were fabricated from 420M stainless steel with aspheric surface cavities appropriate to a particular lens design. The bushing was made from tungsten carbide. The assembly was housed in a glove box containing a reducing gas, viz., 92% $N_2$ and 8% $H_2$.

The mould assembly with the preform therein was heated within the induction coil to 331°C and soaked for five minutes at that temperature to ensure thermal equilibrium. That temperature corresponded to a glass viscosity of about $9\times10^8$ poises $19\times10^7$ Pa. s). A force equivalent to 1300 psi ($9\times10^6$ Pa) was applied to the mould for one minute. The load was released and the mould assembly then cooled rapidly to 280°C, where the glass exhibited a viscosity of about $10^{12}$ to $10^{13}$ poises ($10^{11}$-$10^{12}$ Pa. s), the mould disassembled, the resulting lens removed therefrom and placed on its side on a ceramic plate, and the plate and lens transferred to an annealer operating at about 280°C. The annealer utilized an air atmosphere and cooled the lens to room temperature at about 50°C/hour.

Upon being tested via transmission interferometry at a numerical aperture of 0.4, the RMS optical path difference between the incoming and existing wavefront was about 0.050 $\lambda$. Hence, the optical performance of the lens is substantially better than the customarily accepted diffraction limit criterion of 0.074 $\lambda$.

Example 2

A glass preform was prepared having the same composition as, and being shaped in like manner to, the practice described above in Example 1. The press shown in Figure 1 was assembled with 10 mm diameter moulds having spherical cavities coated with a platinum-rhodium-gold alloy, the bushing being fabricated from tungsten carbide. The mould assembly with the preform therein was heated to 338°C in the ambient environment, that temperature corresponding to a glass viscosity of $2\times10^8$ poises ($2\times10^7$Pa . s), and soaked for five minutes. A force equivalent to 550 psi ($3.8\times10^6$ Pa) was applied to the moulds for 25 seconds. With the load still in place, the mould assembly was cooled rapidly to 288°C, this temperature corresponding to a glass viscosity of $10^{11}$ poises ($10^{10}$ Pa. s) and then immediately disassembled with the lens being transferred to an annealer. The surface of the lens deviated from the spherical by somewhat more than one wavelength.

Example 3

The conditions of Example 2 were repeated except that the mould assembly was held under load at 288°C for five minutes before disassembly. The f 0.8 spherical surface of the lens replicated the mould to within 0.21 $\lambda$ P-P and 0.030 $\lambda$ RMS. The abbreviation P-P means peak-to-peak. The expression represents the difference between the maximum and minimum values of the population. Hence:

$$P - P = x_{max.} - x_{min.}$$

RMS signifies root-mean-square. The expression designates the square root of the mean of the square of the difference between the values of the population and its mean. Hence:

$$RMS = \frac{\sqrt{(\Sigma_i(x_i - \overline{x})^2)}}{n}$$

where

$$\overline{x} = \frac{\Sigma x_i}{n}$$

It appears that where, as in Example 2, the mould is cooled under pressure, the glass both differentially shrinks away from the mould during cooling because of differences in thermal expansion existing between the glass and mould, and tries to flow back into conformity with the mould surface because of the pressure being applied thereto. These circumstances lead to the development of a lens having a distorted surface figure. In contrast, Example 3 demonstrates that the application of a hold under load at a low temperature, but whereat the glass exhibits a viscosity no greater than $10^{12}$ poises ($10^{11}$ Pa . s), for a sufficient length of time to achieve isothermal conditions, allows the glass to conform to the mould, thereby resulting in the production of a lens having a good surface figure.

Example 4

A glass pellet was cast from a melt and shaped into a preform in like manner to the procedure described above in Example 1, the glass having the composition described in Example 1. The apparatus shown in Figure 2 was assembled, the moulds and ring being fabricated of 400 series stainless steels, and the entire assembly with the preform therein being enclosed in a glove box containing a reducing gas, viz., 92% $N_2$ and 8% $H_2$.

The assembly was heated to 319°C ($\sim3\times10^9$ poises or $3\times10^8$ Pa . s) and soaked at that temperature for four minutes. A force equivalent to 500 psi ($3.5\times10^6$ Pa) was applied to the moulds for one minute. With the load still in place, the mould assembly was cooled to 280°C ($\sim7\times10^{11}$ poises or $7\times10^{10}$ Pa . s), that temperature held for about five minutes, the assembly thereafter disassembled, and the lens transferred to an annealer operating at about 270°C. The surface of the annealed lens replicated the mould surface to better than 0.25 λ P-P. Both of the moulding steps were undertaken under isothermal conditions. That practice is not mandatory. The second or final pressing must be conducted under isothermal conditions to secure a true surface figure, but the first pressing need not be.

Example 5

A glass preform shaped as biconvex with a radius of curvature of 24.0 mm was prepared utilizing 24 mm diameter moulds in a similar manner to that described in Example 1 from a composition consisting essentially, in weight percent on the oxide basis, of about 5.9% PbO, 19.2%

$$K_2O+Na_2O+CaO,$$

7.9% $B_2O_3$, and 67% $SiO_2$. An apparatus paralleling that illustrated in Figure 1 was assembled utilizing spherical moulds fabricated from tungsten carbide.

The preform was placed inside the mould and the assembly heated to 635°C, at which temperature the glass demonstrates a viscosity of $10^9$ poises ($10^8$ Pa . s). A load of 12,300 psi ($8.5\times10^7$ Pa) was applied to the mould for two minutes. With the load in place, the mould assembly was cooled to 570°C where the glass manifests a viscosity of $10^{13}$ poises ($10^{12}$ Pa . s). The load was removed by lifting upper mould 2 and the lens annealed while resting upon lower mould 1.

Interferometric measurements of the finished lens evidenced excellent reproducibility.

Example 6

A glass preform of the same geometry and prepared in a similar manner to that described in Example 5 was formed from a composition consisting essentially, in weight percent on the oxide basis, of about 1% MgO, 27%

$$CaO+BaO+Na_2O+K_2O,$$

0.7% $Al_2O_3$, 0.7% $B_2O_3$, 0.6% $Sb_2O_3$, and 70% $SiO_2$. Using the same moulding assembly as reported in Example 5, the preform was placed inside the mould and the assembly heated to 650°C, at which temperature the glass exhibits a viscosity of $5\times10^8$ poises ($5\times10^7$ Pa . s). A load of 13,000 psi ($9\times10^7$ Pa) was applied to the mould for two minutes. The mould assembly was cooled to 538°C where the glass demonstrates a viscosity of $10^{13}$ poises ($10^{12}$ Pa . s) under a gradually decreasing load such that at 538°C the load was zero. Upper mould 2 was lifted and the lens annealed while resting upon lower mould 1.

Interferometric examination of the finished lens indicated excellent reproducibility.

Example 7

A glass preform of the same geometry and prepared in a similar manner as that described in Example 5 was formed from a composition consisting essentially, in weight percent on the oxide basis, of about 2% $Na_2O+K_2O$, 70.5% PbO, 0.5% $B_2O_3$, and 27% $SiO_2$. Employing the same moulding assembly as that used in Example 5, the preform was placed inside the mould and the assembly heated to 525°C, at which temperature the glass displays a viscosity of $10^9$ poises ($10^8$ Pa . s). A load of 11,600 psi ($8\times10^7$ Pa) was applied to the mould for two minutes. With the load in place, the mould assembly was cooled to 445°C where the glass evidences a viscosity of $10^{13}$ poises ($10^{12}$ Pa . s). The load was removed by lifting upper mould 2 and the lens annealed while resting upon lower mould 1.

Interferometric inspection of the finished lens denoted excellent reproducibility.

Whereas in Examples 2 to 7 the load employed in the pressing step was maintained at the same level or gradually decreased as the mould assembly was cooled to a temperature at which the glass exhibited a viscosity of about $10^{11}$-$10^{13}$ poises, that practice is not necessary. A force must be applied which is sufficient to hold the glass shape in conformity with the mould, but such load can be considerably less than that used in pressing. Forces greater than the pressing load can likewise be used but for no practical advantage.

Also, although in the above Examples the preform was placed into the mould and the temperature thereof raised in concert with the mould, that practice is not a required feature of the process of the invention. Thus, the preform and mould can be heated to the desired temperature apart from each other and brought together only at the time a load is applied to the mould.

Whereas articles demonstrating excellent surface figures can be produced most rapidly through a single-step, isothermal pressing at temperatures where the glass exhibits a viscosity within the interval of $10^8$ to $5\times10^{10}$ poises ($10^7$ to $5\times10^9$ Pa . s) and the article is immediately removed from the mould assembly, the best surface figures are generated when the final surface figure is achieved at temperatures where the glass is at a viscosity between about $10^{11}$ and $10^{12}$ poises ($10^{10}$ and $10^{11}$ Pa . s). As would be expected, the time demanded for the pressing operation at those temperatures becomes quite long. Consequently, a two step process, such as is described above in Example 3, comprises the preferred practice. Thus, an initial pressing is undertaken for a brief period at temperatures where the glass is at a viscosity of about $10^8$ to $10^{10}$ poises ($10^7$ to $10^9$ Pa . s) and, thereafter, the force is maintained on the mould while it is quickly cooled to a temperature where the glass is at a viscosity of about $10^{11}$ to $10^{12}$ poises ($10^{10}$ to $10^{11}$ Pa . s). After a relatively brief hold at such a temperature to ensure isothermal conditions, the article is removed from the mould. Long hold periods do not adversely affect the character of the shaped body but are not economically desirable.

An alternative process for conducting the preferred two-step moulding process involves the use of two sets of moulds. The first set would be utilized at temperatures where the glass preform is at a viscosity of about $10^8$ to $10^{10}$ poises ($10^7$ to $10^9$ Pa . s). After pressing at a temperature within that range, the preform would be removed from the moulds without cooling and with only a potential slight loss of surface figure. The glass preform would thereafter be introduced into a second set of moulds and exposed to temperatures where the glass is at a viscosity of about $10^{11}$ to $10^{12}$ poises ($10^{10}$ to $10^{11}$ Pa . s). A second pressing at those temperatures trues up the surface figure without demanding long moulding times, because the amount of flow experienced by the glass would be very small. The second pressing step must be carried out under isothermal conditions whereas such are not required in the first pressing.

As observed above, essentially any glass can be moulded into shapes of high precision and excellent surface figure provided mould material is available which is sufficiently refractory and inert to the glass. For practical reasons, pressing temperatures from 100° to 650°C, preferably, from about 250° to about 450°C are highly desirable. Accordingly, glass compositions demonstrating viscosities between $10^8$ and $10^{12}$ poises ($10^7$ and $10^{11}$ Pa . s) at temperatures over the interval of 100° to 650°C, and, preferably, from about 250° to 450°C satisfy those desiderata. Phosphate-based glass compositions are recognized in the glass art as commonly possessing low transition temperatures. Such glasses lend themselves well to the moulding technique of the invention. However, phosphate-based glasses are also known in the glass art as frequently exhibiting poor chemical durability.

UK Patent Specification No. 2069994A discloses glass compositions within the alkali metal aluminofluorophosphate system demonstrating transition temperatures below 350°C and good weathering resistance which consist essentially, as analyzed in weight percent on the oxide basis, of 30-75% $P_2O_5$, 3-25% $R_2O$, wherein $R_2O$ consists of 0-20% $Li_2O$, 0-20% $Na_2O$; 0-20% $K_2O$, 0-10% $Rb_2O$, and 0-10% $Cs_2O$, 3-20% $Al_2O_3$, and >3% but <24% F, the atomic ratio F:Al being between 1.5-5 and the atomic ratio R:P being less than 1. Because of their overall properties, those glasses are considered to be the most preferred compositions for use in the process of the present invention.

In the above specific working examples, articles were moulded in laboratory apparati under different thermal conditions corresponding to a range of glass viscosities. Nevertheless, the ideal situation from a practical point of view involves the use of a minimum dwell time. Moulding viscosities within the range of about $10^8$ to $10^{12}$ poises ($10^7$ to $10^{11}$ Pa .s) can be tailored to provide such a minimum dwell time.

Moulding at temperatures where a glass exhibits a viscosity less than $10^8$ poises ( $10^7$ Pa . s) can be undertaken, but there is a risk of such difficulties as glass inhomogeneity and unwanted flow of glass between clearances in the moulding assembly resulting in fins on the edge of the pressed product. Conversely, moulding at glass viscosities in excess of $10^{12}$ poises ($10^{11}$ Pa . s) demands high pressing forces and extended dwell times, and frequently leads to glass breakage because of its resilient behaviour.

## Claims

1. A process for moulding a precision optical element which does not require grinding or polishing which comprises the following steps:

(a) a glass preform (9;26) is prepared having an overall geometry closely similar to that of the desired final product and wherein the glass preform is shaped to minimise trapping of gas in the cavity in which it will be moulded;

(b) a mould (1,2;20,21) is prepared having the precise internal configuration to impart the desired geometry to the final product;

(c) said preform is exposed to a temperature at which said glass exhibits a viscosity within the range of from $10^8$ to $10^{12}$ poises ($10^7$ to $10^{11}$ Pa.s);

(d) said mould is exposed to a temperature at or in the vicinity of that of said preform;

(e) with said preform in said mould while said preform is within said viscosity range, a load is applied to said mould for a period of time sufficient to bring said mould and said preform, in at least the vicinity of said mould, to approximately the same temperature and to shape said preform into conformity with said mould;

(f) said glass shape is removed from said mould at a temperature where said glass exhibits a viscosity of less than $10^{13}$ poises ($10^{12}$ Pa.s); and thereafter

(g) said glass shape is annealed.

2. A process according to claim 1 wherein said glass is of a composition which exhibits a viscosity within the range of from $10^8$ to $10^{12}$ poises ($10^7$ to $10^{11}$ Pa . s) over the temperature interval of from 100° to 650°C.

3. A process according to claim 1 or 2, wherein said preform (9; 26) is shaped at a temperature at which said glass exhibits a viscosity of from $10^8$ to $5×10^{10}$ poises ($10^7$ to $5×10^9$ Pa . s).

4. A process according to any preceding claim, wherein said load applied to said mould (1, 2; 20, 21 ) ranges from about 1 to 50,000 psi ($7 \times 10^3$ to $3.5 \times 10^8$ Pa).

5. A process according to any preceding claim, wherein the difference between the temperature of the preform (9; 26) at least in the vicinity of the mould (1, 2; 20, 21) and the temperature of the mould at the conclusion of the application of said load does not exceed about 20°C.

6. A process according to any preceding claim, wherein said glass shape is removed from said mould (1, 2; 20, 21) at a temperature where said glass exhibits a viscosity of no more than $10^{12}$ poises ($10^{11}$ Pa . s).

7. A process according to claim 2 wherein said glass preform (9; 26) consists essentially, as analyzed in weight percent on the oxide basis, of 30-75% $P_2O_5$, 3-25% $R_2O$, wherein $R_2O$ consists of 0-20% $Li_2O$, 0-20% $Na_2O$, 0-20% $K_2O$, 0-10% $Rb_2O$, and 0-10% $Cs_2O$, 3-20% $Al_2O_3$, and >3% but <24% F, the atomic ratio F:Al being from 1.5 to 5 and the atomic ratio R:P being less than 1.

8. A process according to claim 1 wherein
    (i) the viscosity referred to in step (c) is from $10^8$ to $5 \times 10^{10}$ poises ($10^7$ to $5 \times 10^9$ Pa . s);
    (ii) a load is maintained on said mould (1, 2; 20, 21) while said mould is cooled to a second temperature at which said glass shape, at least in the vicinity of said mould, is at a viscosity of from about $10^{11}$ to about $10^{12}$ poises ($10^{10}$ to $10^{11}$ Pa . s); and
    (iii) said temperature and a load are maintained for a period of time sufficient to bring said mould and said glass shape, at least in the vicinity of said mould, to substantially the same temperature.

9. A process according to any preceding claim, wherein after the glass shape has been removed from said mould (1, 2; 20, 21), and before it is annealed, it is introduced into another mould of similar configuration, said preform (9; 26) and said other mould being exposed to a temperature at which said glass exhibits a viscosity within the range of from about $10^{11}$ to about $10^{12}$ poises ($10^{10}$ to $10^{11}$ Pa . s) and a load is applied to said mould for a period of time sufficient to bring said mould and said preform, in at least the vicinity of said mould, to approximately the same temperature and to shape said preform into conformity with said mould.

**Patentansprüche**

1. Verfahren zum Formen eines optischen Präzisionselementes, welches kein Schleifen und Polieren erfordert, das folgende Verfahrensschritte enthält:
    a) es wird ein Glasrohling (9; 26) hergestellt, der eine Gesamtgeometrie besitzt, die sehr ähnlich ist der des gewünschten Endproduktes und wobei der Glasrohling so geformt ist, daß der Gaseinschluß in dem Hohlraum, in welchen er geformt wird, auf ein Minimum reduziert wird;
    b) es wird eine Preßform (1, 2; 20, 21) hergestellt, welche die genaue Innenkonfiguration aufweist, um dem Endprodukt die gewünschte Geometrie zu verleihen;
    c) der Rohling wird einer Temperatur ausgesetzt, bei welcher das Glas eine Viskosität innerhalb des Bereichs von $10^8$ bis $10^{12}$ Poises ($10^7$ bis $10^{11}$ Pa.s) zeigt;
    d) die Preßform wird einer Temperatur ausgesetzt, die bei oder in der Nähe der des Rohlings liegt;
    e) wenn der Rohling in der Preßform ist, während sich der Rohling innerhalb des Viskositätsbereichs befindet, wird auf die Preßform während einer Zeitdauer eine Last aufgebracht, die ausreicht, um die Preßform und den Rohling wenigstens in der Umgebung der Preßform annähernd auf die gleiche Temperatur zu bringen und um den Rohling in Konformität mit der Preßform zu gestalten;
    f) die Glasform wird aus der Preßform bei einer Temperatur entfernt, bei welcher das Glas eine Viskosität von mehr als $10^3$ Poises ($10^{12}$ Pa.s) zeigt; und danach
    g) wird die Glasform vergütet.

2. Verfahren nach Anspruch 1, dadurch gekennzeichnet, daß das Glas eine Zusammensetzung aufweist, die eine Viskosität innerhalb des Bereichs von $10^8$ bis $10^{12}$ Poises ($10^7$ bis $10^{11}$ Pa. s ) über das Temperaturintervall von 100° bis 650° C zeigt.

3. Verfahren nach Anspruch 1 oder 2, dadurch gekennzeichnet, daß der Rohling (9; 26) bei einer Temperatur geformt wird, bei der das Glas eine Viskosität von $10^8$ bis 5 x $10^{10}$ Poises ( $10^7$ bis 5 x $10^9$ Pa. s ) zeigt.

4. Verfahren nach einem vorangehenden Anspruch, dadurch gekennzeichnet, daß die auf die Preßform (1, 2; 20, 21) aufgebrachte Last sich in einem Bereich von etwa 1 bis 50.000 psi ( $7 \times 10^3$ bis $3,5 \times 10^8$ Pa ) bewegt.

5. Verfahren nach einem vorangehenden Anspruch,
dadurch gekennzeichnet,
daß der Unterschied zwischen der Temperatur des Rohling (9; 26) wenigstens in der Nähe der Preßform (1, 2; 20, 21) und die Temperatur der Preßform am Ende des Aufbringens der Belastung etwa 20°C nicht übersteigt.

6. Verfahren nach einem vorangehenden Anspruch,
dadurch gekennzeichnet,
daß die Glasform von der Preßform (1, 2; 20, 21) bei einer Temperatur entfernt wird, bei der das Glas eine Viskosität von nicht mehr als $10^{12}$ Poises ($10^{11}$ Pa.s ) zeigt.

7. Verfahren nach Anspruch 2,
dadurch gekennzeichnet,
daß der Glasrohling (9; 26) im wesentlichen nach Analyse in Gewichtsprozent auf Oxidbasis sich zusammensetzt aus 30-75% $P_2O_5$, 3-25% $R_2O$, wobei $R_2O$ aus 0-20% $Li_2O$, 0-20% $Na_2O$, 0-20% $K_2O$, 0-10% $Rb_2O$ und 0-10% $Cs_2O$, 3-20% $Al_2O_3$ und >3% aber <24% F besteht, wobei das Atomverhältnis F:Al zwischen 1,5 und 5 liegt und wobei das Atomverhältnis R:P weniger als 1 beträgt.

8. Verfahren nach Anspruch 1,
dadurch gekennzeichnet,
daß

(i) die im Verfahrensschritt (c) genannte Viskosität von $10^8$ bis $5 \times 10^{10}$ Poises ($10^7$ bis $5 \times 10^9$ Pa.s ) beträgt;
(ii) eine Belastung auf der Preßform (1, 2; 20, 21) beibehalten wird, während die Preßform auf eine zweite Temperatur abgekühlt wird, bei der sich die Glasform wenigstens in der Nähe der Preßform auf einer Viskosität von etwa $10^{11}$ bis etwa $10^{12}$ Poises ($10^{10}$ bis $10^{11}$ Pa.s ) befindet; und
(iii) die Temperatur und die Belastung in einer Zeitdauer aufrechterhalten werden, die ausreicht, um die Preßform und die Glasform wenigstens in der Nähe der Preßform auf die im wesentlichen selbe Temperatur zu bringen.

9. Verfahren nach einem vorangehenden Anspruch,
dadurch gekennzeichnet,
daß die Glasform nach ihrem Entfernen aus der Preßform (1, 2; 20, 21) und vor ihrem Vergüten in eine andere Preßform ähnlicher Konfiguration eingeführt wird, wobei der Rohling (9; 26) und die andere Preßform einer Temperatur ausgesetzt werden, bei der das Glas eine Viskosität innerhalb des Bereichs von etwa $10^{11}$ bis etwa $10^{12}$ Poises ($10^{10}$ bis $10^{11}$ Pa.s ) zeigt, und daß auf die Preßform eine Belastung während einer Zeitdauer aufgebracht wird, welche ausreicht, die Preßform und den Rohling wenigstens in der Nähe der Preßform annähernd auf dieselbe Temperatur zu bringen und den Rohling in Konformität mit der Preßform zu gestalten.

## Revendications

1. Un procédé pour mouler un élément optique de précision sans nécessiter de meulage ou polissage qui comprend les étapes suivantes :

(a) on prépare une préforme de verre (9 ; 26) ayant une géométrie d'ensemble étroitement similaire à celle du produit final désiré; cette préforme étant conformée pour minimiser l'emprisonnement de gaz dans la cavité dans laquelle elle sera moulée ;
(b) on prépare un moule (1, 2 ; 20, 21) ayant la configuration intérieure précise pour communiquer la géométrie désirée au produit final ;
(c) on expose la préforme à une température à laquelle le verre présente une viscosité se situant dans la gamme de $10^7$ à $10^{11}$ Pa.s ;
(d) on expose le moule à une température qui est celle de la préforme ou qui en est voisine ;
(e) la préforme étant dans le moule, pendant que la préforme est dans cette gamme de viscosités, on applique une charge au moule pendant un laps de temps suffisant pour amener le moule et la préforme, au moins au voisinage du moule, approximativement à la même température et pour façonner la préforme conformément au moule ;
(f) on retire la forme de verre du moule à une température où le verre présente une viscosité inférieure à $10^{12}$ Pa.s ; et ensuite
(g) on recuit la forme de verre.

2. Un procédé selon la revendication 1, dans lequel le verre est d'une composition qui présente une viscosité se situant dans la gamme $10^7$ à $10^{11}$ Pa.s sur l'intervalle de température de 100 à 650°C.

3. Un procédé selon la revendication 1 ou 2, dans lequel on façonne la préforme (9; 26) à une température à laquelle le verre présente une viscosité de $10^7$ à $5 \times 10^9$ Pa.s.

4. Un procédé selon l'une quelconque des revendications précédentes, dans lequel la charge appliquée au moule (1, 2; 20, 21) va d'environ $7 \times 10^3$ à $3,5 \times 10^8$ Pa.

5. Un procédé selon l'une quelconque des revendications précédentes, dans lequel la différence entre la température de la préforme (9; 26), au moins au voisinage du moule (1, 2; 20, 21) et la température du moule à l'achèvement de l'application de la charge ne dépasse pas environ 20°C.

6. Un procédé selon l'une quelconque des revendications précédentes, dans lequel on retire la forme de verre du moule (1, 2; 20, 21) à une température où le verre présente une viscosité non supérieure à $10^{11}$ Pa.s.

7. Un procédé selon la revendication 2, dans lequel la préforme de verre (9; 26) est essentiellement formée, telle qu'analysée en pourcentage en poids sur la base des oxydes, de 30 à 75 % de $P_2O_5$, 3 à 25 % de $R_2O$ dans lequel $R_2O$ est formé de 0 à 20 % de $Li_2O$, 0 à 20 % de $Na_2O$, 0 à 20 % de $K_2O$, 0 à 10 % de $Rb_2O$ et 0 à 10 % de $Cs_2O$, 3 à 20 % d'$Al_2O_3$ et plus de 3 % mais moins de 24 % de F, le rapport atomique F:Al étant de 1,5 à 5 et le rapport atomique R:P étant inférieur à 1.

8. Un procédé selon la revendication 1, dans lequel
   (i) la viscosité mentionnée à l'étape (c) est de $10^7$ à $5 \times 10^9$ Pa.s ;
   (ii) on maintient une charge sur le moule (1, 2; 20, 21) pendant que l'on refroidit le moule à une deuxième température à laquelle la forme de verre, au moins au voisinage du moule, est à une viscosité d'environ $10^{10}$ à environ $10^{11}$ Pa.s ; et
   (iii) on maintient cette température et une charge pendant un laps de temps suffisant pour amener le moule et la forme du verre, au moins au voisinage du moule, pratiquement à la même température.

9. Un procédé selon l'une quelconque des revendications précédentes, dans lequel, une fois que la forme de verre à été retirée du moule (1, 2; 20, 21) et avant qu'on ne la recuise, on l'introduit dans un autre moule de configuration similaire, la préforme (9; 26) et l'autre moule étant exposés à une température à laquelle le verre présente une viscosité se situant dans la gamme d'environ $10^{10}$ à environ $10^{11}$ Pa.s et on applique une charge à ce moule pendant un laps de temps suffisant pour amener le moule et la préforme, au moins au voisinage du moule, approximativement à la même température et façonner la préforme en conformité avec le moule.

Fig. 1

Fig. 2